# EUROPEAN PATENT APPLICATION

(11) **EP 1 777 978 A1**
(43) Date of publication of application: **25.04.2007**
(21) Application number: 05300834.8
(22) Date of filing: 18.10.2005
(51) Int. Cl.: H04Q 7/38

(54) **Service provider selection in a communication network**

(71) Applicant: Hewlett-Packard Development Company, L.P., Houston, TX 77070 (US)
(72) Inventor: Caradec, Jean-Philippe, 38180, Seyssins (FR); Brandt, Marc HP Centre de Compétences France, 38320, Eybens (FR)
(74) Representative: Lloyd, Richard Graham

(57) **Abstract**

Embodiments provide a communication system or method supporting service selection of a service provider (104,106,108) from a number of potential service providers to support the establishment of a communication channel between a network entity associated with the selected service provider and a mobile station (102).

## Description

### Field of the invention

The present invention relates to a communication system and method.

### Background to the invention

It has become a common practice amongst mobile telephone subscribers to switch service providers in response to attractive services such as, for example, call tariffs, discounts, free calls, free text messages and the like. Many mobile subscribers carry a number of mobile telephones that are associated with respective subscribers, which allows them to use the network of a selected service provider according to prevailing conditions or advantages associated with such a selected provider. Many younger people, rather than carrying many mobile telephones, merely carry multiple SIM cards and swap or use SIM cards according to any such advantages or prevailing conditions to change network their network service provider. For example, in Italy some 13% of mobile users carry multiple SIM cards. This is thought, at least in part, to be behind the success of prepaid telephony services, which allows subscribers to change between operators according to subscriber needs and operator service offerings. However, it will be appreciated that it is cumbersome and inconvenient to carry either multiple telephones or multiple SIM cards. Still further, carrying multiple SIM cards, that is, one card per service operator or network provider, requires a mobile subscriber or user to be engaged in a contractual relationship with multiple parties, which, in turn, complicates the financ es of the mobile user.

Also, mobile users are well aware that service providers have different areas of coverage, even though many overlap. For example, within areas of low population or areas that are difficult to cover from a radio perspective due to mo untains or the like, which might necessitate the use of microcells or Pico sells rather than the conventional cells served by base transceiver stations, a service provider may choose not to provide coverage in those areas or may dimension or tailor the traffic carrying capacity of cells such that they are closely engineered to anticipated traffic carrying needs. This may lead to a mobile user being unable to make a call if all available bandwidth is being consumed. Also, the data rates usable by mobile users can vary between service providers according to, for example, the size of any radio coverage cell and the distance of the mobile user to the base transceiver station. Not all service provider networks have the same density of cells to cover the geographical region. Accordingly, high bandwidths may be available within a given geographical area via one service provider as compared to another.

It is an object of embodiments of the present invention to at least mitigate some of the problems of the prior art.

### Summary of invention

Accordingly, a first aspect of embodiments of the present invention provide a communication system comprising means to receive data from a mobile station comprising an indication of a selected service provider chosen from a plurality of service providers; and means for influencing signalling for establishing a communication channel between a network entity associated with the selected service provider and the mobile station.

Embodiments provide a communication system wherein the means for influencing the signalling comprises means to output signalling to establish a communication channel between the mobile station and a network entity associated with the selected service provider.

Embodiments provide a communication system comprisi ng means to output graphical interface data to the mobile station for processing by the mobile station to present a user interface depicting the plurality of service providers and for receiving said selection therefrom.

Embodiments provide a communication system comprising means for collating data associated with the service providers and in which said graphical interface data comprises the collated data.

Embodiments relate to a communication system in which the collated data relates to technical capabilities of network service providers or communication tariffs of the service providers.

Embodiments provide a communication system comprising means for updating a database associated with identification data of the mobile station reflecting the selection of the selected service provider and the establishment of the communication channel using the network entity of the selected service provider.

Embodiments provide a communication system as claimed in any preceding claim comprising a communication portal using a wireless protocol as opposed to support data exchanges with the mobile station.

Embodiments provide a communication system comprising means to output data to the network entity of the selected service provider to cause that network entity to exchange call signalling to establish a communication channel with the mobile station.

Embodiments provide a communication system comprising means to output data to the mobile station to cause the mobile station to exchange call signalling with the network entity of the selected service provide r to establish a communication channel.

Embodiments provide a computer program comprising code for implementing a system as described and claimed in this specification. Preferably, embodiments provide a computer readable storage storing such a computer program.

Advantageously, mobile subscribers can selectively cho ose a service provider to support their mobile telephony calls or data services.

Therefore, a mobile user is able to improve the technical services available by selecting the service provider network having technical capabilities that meet the needs of the mobile user.

### Brief description of the drawings

Embodiments of the present invention will now be described, by way of example only, with reference to the accompanying dra wings in which:
figure 1 depicts a communication arrangement;
figure 2 illustrates, in more detail, broker to mobile station operation s and interaction s;
figure 3 shows call signalling or a data exch ange according to an embodiment between a mobile station and a broker; and
figure 4 shows call signalling or a data exchange according to an embodiment between a mobile station and a called mobile station.

### Detailed description of preferred embodiments

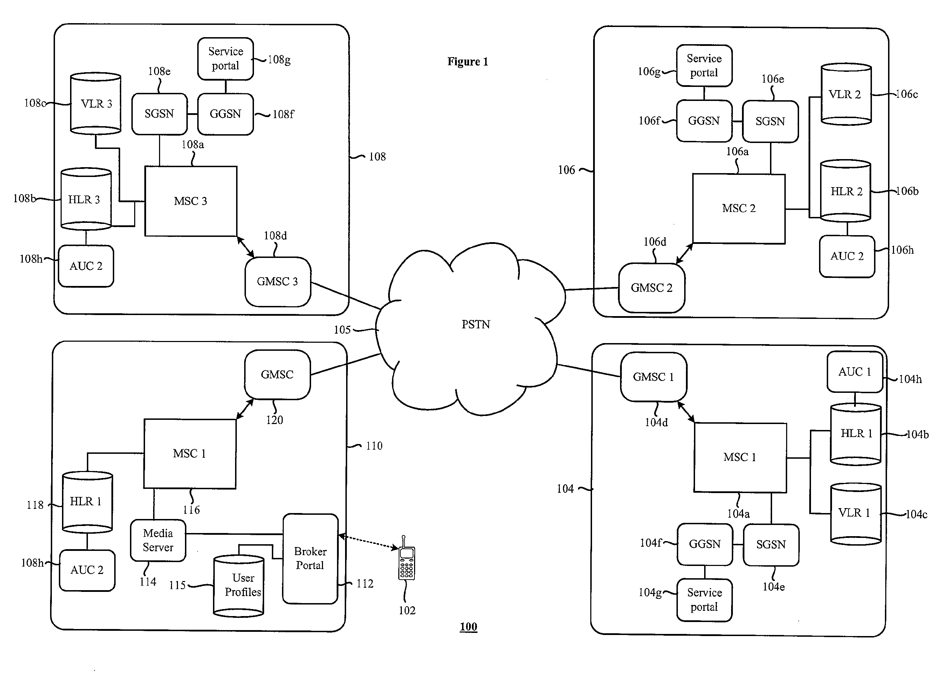

Referring to figure 1, there is shown a communication arrange ment 100 for supporting communication between a mobile telephone or calling telephone 102 and another mobile telephone (not shown) or called telephone. The communication arrangement 100 comprises a plurality of service provider networks 104 to 108. In preferred embodiments the service provider networks are wireless or mobile phone networks. Each service provider network is shown, for simplicity, as having substantially the same infrastructure. Referring to a first service provider network 104, it can be appreciated that is comprises a Mobile Switching Centre (MSC) 104a operable with a Home Location Register (HLR) 104b and Visitor Location Register (VLR) 104c to note the location of home and visitor mobile telephones respectively. Associated with the HLR 104b is an authentication centre 104h for providing the conventional authentication facilities of mobile networks. The MSC 104a communicates with a Public Switched Telephone Network (PSTN) 105 via a Gateway Mobile Switching Centre (GMSC) 104d. Preferably, the MSC 104a is also operable with a Serving GPRS Support Node (SGSN) 104e and a Gateway GPRS Support Node (GGSN) 104f, which, itself, is in communication with a service portal 104g. These network entities provide the radio interface, PSTN interface an d IP interfaces for supporting at least one of voice and data communication exchanges with the mobile telephone 102 and another communication device such as, for example, another mobile telephone or other network entity.

It will be appreciated that each service provider network, in the case of the network being a wireless network, will have a corresponding area of coverage. In the embodiments described it will be assumed that the mobile telephone is in an area serviced by one or more of the service provider networks. The geographical area of the mobile telephone might be serviced by two of the service provider networks or three of the service provider networks. It will also be appreciated that three service provider networks have been depicted for illustrative purposes only. Embodiments of the present invention are equally effective with two service providers or more than three service providers.

One skilled in the art will appreciate that each service provider network 104 to 108 has been illustrated simp listically since it is well understood that the infrastructure comprises a hierarchy of BTSs and BSCs between the mobile telephone and the MSCs.

Figure 1 also shows a further service provider network 110. The further service provider network 110 comprises a broker portal 112 that can communicate with or establish at least wireless data communication channels with the mobile station 102. For example, the mobile telephone might be a 3G telephone that is data enabled, that is, it can use GPRS to exchange dat a with other network entities. Alternatively, the mobile telephone or mobile device might use some other wireless data protocol in the form of, for example, an 802.11 enabled PDA or laptop that comprise 802.11 communication capabilities or some other wire less data protocol capabilities. The wireless data protocol used to support a user interface such as, for example, a WAP interface or a SOAP interface, that allows the mobile telephone user to exchange data and, more particularly, web-pages served by the broker portal 112. In preferred embodiments, the data exchanges are made using XML.

The further service provider network 110 comprises an MSC 116 with at least a corresponding HLR 118 and a respective GMSC 120 for communicating with the MSCs, HLRs and VLRs of the other networks 104 to 108 in the conventional manner.

In broad terms, the wireless networks 104 to 108 provide mobile telephony services, data or voice, to the mobile station under the direction of the media server 114. The HLR118 of the broker network associates the mobile telephone with a selected one of the wireless networks such that the selected wireless network provides the mobile telephony services to the mobile telephone. However, the mobile user is registered with the broker operator and, therefore, the HLR 118 is its HLR.

The user interface presented by the mobile telephone allows the user to select a preferred service provider from a plurality of service providers presented. The present plurality of service providers can comprise one or more of the service providers of the service provider networks shown in figure 1.

The user of the mobile telephone selects a service provider of interest, that is, a mobile service provider to support voice or data exchanges with other entities using an appropriate interface such as, for example, the WAP interface. It will be appreciated that WAP and SOAP interfaces are merely two examples of a number of possible interfaces or protocols that could be used to support data exchanges of embodiments of the present invention.

Upon establishing communication with the broker portal 112, an initial web -page or home page is served by the broker portal 112 after it has checked that the mobile telephone user is an authorised user. It will be appreciated that any such authentication will preferably be undertaken using client-side software running on the mobile telephone. The initial web-page might provide access to many different broker portal services and, in particular, to a broker service that allow s the user of the mobile telephone to specify which service provider network of the plurality of service provider networks should be used to support the mobile station user's voice and data needs. Once the user has made a selection, it is communicated to the broker portal 112 via the interface presented by the broker portal server 112 or some other interface, such as a SOAP interface of client software running at the mobile telephone. The broker then updates a user profile 115, which is discussed later, accordingly. From thereon the broker, using information retrieved from the HLR, informs the selected service provider of their election and the need to alter their records accordingly to support the telephony needs of the mobile telephone 102 via their network. Additionally, or optionally, the broker portal also informs the previously elected service provider that their services are no longer required. It should be noted that the commercial relationships that prevail according to the embodiments are (1) between the broker operator and the mobile telephone user and (2) between the broker operator and the various service providers. These commercial relationships allow the mobile user to select the service offerings of the various service providers according to their needs.

Therefore, the mobile user can sel ect a service provider to meet their needs according to, for example, prevailing call tariffs, offers and other commercial consideration in an attempt to improve their return on investment. For example, if it is ann ounced that the second service provider will provide lower cost text messages for a period of time as compared to the third service provider, assuming the latter to be a mobile user's currently preferred service provider, the mobile user can take advantage of such an offer by informing the broker portal, via the user interface, that the second service provider network 106 is the mobile user's preferred network instead of the third service provider network 108. Once the offer has expired, the mobile user might revert to the third service provider network 108, select some other network or remain with the currently selected service provider network as they see fit according to the current commercial or technical offerings of the various service providers. Alternatively, for example, one service provider might have installed new equipment providing improved communication capabilities such as improved Bit Error Rates, higher traffic carrying capacity, improved data rates, improved geographical coverage or any ot her technical improvement associated with mobile telephony. The user interface can be used to select the service provider that meets the technical requirements of the mobile user.

Also illustrated in figure 1 are a number of serving GPRS support nodes 104 e to 108e that provide IP connectivity with an IP -backbone network as well as a number of Gateway GPRS support nodes 104f to 108f that provide IP connectivity to an external IP network, which allows connection to and exchanges with other service portals su ch as the three service portals 104g to 108g illustrated. However, in preferred embodiments, an initial operator selection exchange between the mobile user 102 and the broker portal 112 is achieved using a data network of a default operator for the mobile telephone.

It will be appreciated that the service providers can be legacy mobile operators, whose equipment is fully registered. In preferred embodiments, the broker operator, in a manner analogous to Mobile Virtual Network Operator (MVNO), can own some of the network infrastructure and can also be a registered operator. Preferably, the broker operator issues SIM cards for mobile devices and deals with charging etc, that is, interacts with the mobile user as would a legacy service provider.

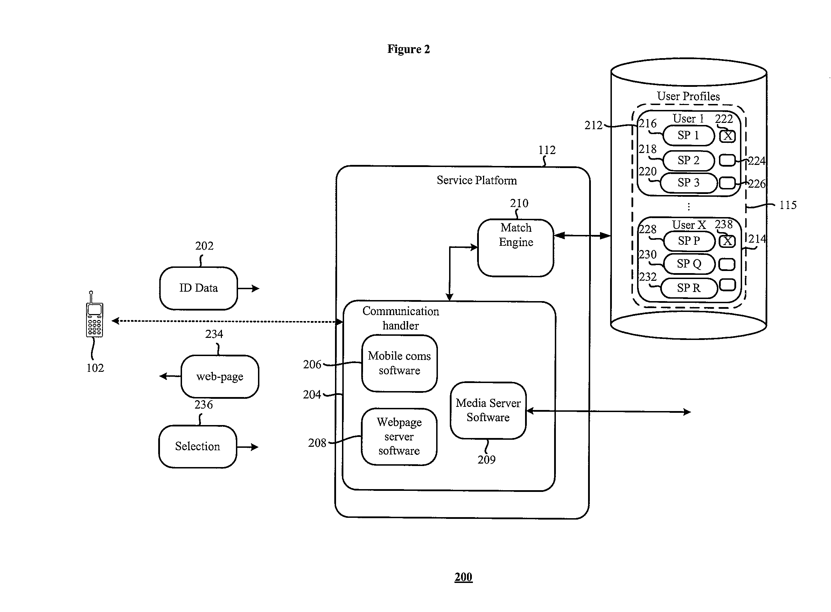

Figure 2 illustrates in greater detail the operations of, and interactions between, the broker portal 112 and the mobile telephone 102. It can be appreciated from the arrangement 200 shown in figure 2 that the mobile telephone 102, in an initial exchange with the bro ker portal 112, forwards identification data 202 that is used by the broker portal 112 in identifying or selecting a corresponding user profile from the user profile database 115. The broker service portal 112 comprises a communication handler 204 that is responsible for establishing and maintaining, that is, managing, communication exchanges with the mobile telephone 102. The communication handler 204 is also responsible for forwarding we b pages served by the broker portal 112 to the mobile telephone 102 via webpage server software 208. Communications with the mobile telephone 102 are handled via mobile communications software 206. Communications with the media server 114 are handled by media server communication software 209. The mobile station communication software 206 is arranged to extract the identification data 202 from any data received from the mobile telephone 102 and to forward the identification data 202 to a match engine 210.

The match engine 210 uses the identification data 202 to identify a corresponding user profile of a plurality of user profiles 212 to 214 stored in the user profile database 150. The first user profile 212 is assumed, for the purpose of illustration only, to match the received identification data 202.

The identification data can be any form of identification associated with the mobile telephone 102, or the associated subscriber or owner. For example, the identification data may comprise the mobile station ISDN (MSISDN), the International Mobile Equipment Identity data or the International Mobile Subscriber Identity data or some other data such as a password.

It can be appreciated that the first user profile 212 comprises a plurality of identifiers 216 to 220 that are associated with the service providers or service prov ider networks 104 to 108. It can also be appreciated that the plurality of identifiers 216 to 220 have respective flags 222 to 226 that are used to provide an indication of the service provider network that is currently selected to meet the needs of the mobile subscriber. It can be appreciated that the first subscriber network 104 is indicated as being the currently selected network for meeting the mobile telephony needs of the mobile subscriber.

Figure 2 also illustrates a second profile 214 comprising substantially similar information to that contained within the first user profile 212 but in respect of a different user, User X. It can be appreciated that user X's agreement with the broker operator is such that they can select between three respective service provider networks as indicated by the associated identifiers 228 to 232, which may be different to, the same as, or partially overlapping with, the service providers available to the mobile user of the mobile telephone 102. It can be appreciated th at User X is illustrated as having service provider "*SPP*" 238 as their currently selected service provider. It will be appreciated the user profile database 115 would typically comprise many more user profiles in addition to the two user profiles illustr ated.

The mobile user of the mobile telephone 102 selects a current service provider network from a plurality of service provider networks presented in a user interface such as, for example, a Web - page 234 served by the broker portal server 112 upon the in itially registering, as part of the power on process of the mobile telephone 102, with the broker portal 112. The mobile user of the mobile telephone 102, using their key pad or other input device of the mobile telephone 102, service provider networks and sends data 236 representing the selection to the broker portal 112. The message (not shown) conveying the data representing the selection is also accompanied by identification data 202 to allow the match engine 210 to update the appropriate user profile with the newly selected service provider network.

Embodiments can also be provided in which the broker portal server 112 serves a web page 234 containing data representing newly signed service provider networks that could, at some point in the future, such as as part of the initial web-page 234 served by the broker portal server 112 upon power on, the used to meet the mobile telephony needs of the mobile user.

In preferred embodiments, the initially presented web page can be bypassed or cleared by the mobile user if, for example, the mobile user does not wish to change the currently selected service provider network. Alternatively, or additionally, the mobile user can request the service provider network selection web page by entering the corresponding URL of the operator selection web - page 234 into a browser of the mobile telephone 102. Therefore, the mobile user can instigate, at their convenience, a change of service provider network. Alternatively, the user can navigate to the home page of the broker portal 112 and locate the operator selection web -page 234 in that manner.

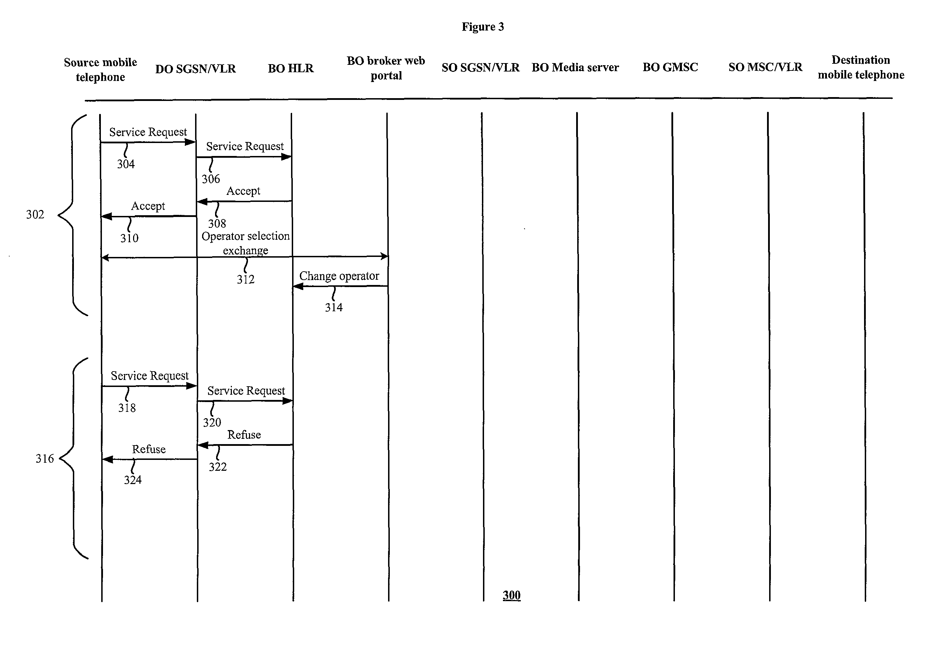

Referring to figure 3, the re is shown a number of interactions or signalling exchanges 300 between various network entities of the arrangement 100 shown in figure 1. In particular, a first signalling exchange 302 in which the mobile telephone 102, upon power up, establishes a communication channel or link with the broker portal 112 by sending a first service request 304 to the SGSN of their currently designat ed service provider or des ignated operator. It will be appreciated that the service request 304 will contain the identification data 202 of the mobile telephone 102. The SGSN sends a service request 306 to the HLR 118 associated with the broker portal 112. The HLR 118 determines whether or not the mobile user or, more accurately, the mobile terminal 102, via its SIM card or otherwise, is registered with the broker portal 112 and, consequently, entitled to use its services. One skilled in the art appreciates that this may involve using some form of authentication via the authentication centre 108h associated with the HLR 118. Assuming that the mobile telephone 102 is registered with the broker portal 112 and, thereby, entitled to use its services, the HLR 118 forwards a first accept signal 308 to the first SGSN which, in turn, forwards an accept signal 310 to the mobile telephone 102 thereby establishing communication between the broker portal 112 and the mobile telephone 102. An operator selection exchange 312 between the mobile telephone 102 and the broker portal 112 occurs, which involves the broker portal server 112 forwarding the operator selection web page 234 to the mobile telephone 102. The HLR 118 of the MSC 116 is updated, via corresponding signalling 314 in response to the mobile user of the mobile telephone selecting a service provider to reflect the service provider network to be considered as the home network of the mobile telephone 102. Furthermore, the user profile 212 associated with the mobile user of the mobile telephone 102 will be updated to reflect any such selection. It will be appreciated that a substantially similar exchange occurs upon power -on when a mobile user wishes to use the telephony services of the selected (or default) operator. A service request is forwarded to the VLR of the selected or default operator, which, in turn, checks with the HLR of the mobile station to determine whether or not it is the default service provider. If the response is positive, an accept signal is sent from the HLR 118 to the selected or default VLR, which, in turn, forwards an accept signal to the mobile telephone.

It will be appreciated that the mobile terminal will be registered with the broker HLR. Therefore, when the mobile telephone is serviced via a base station of another operator, the VLR of that other operator interrogates the broker HLR to ensure that it is allowed to be serviced via the operator of the VLR. Therefore, figure 3 also shows a second signalling exchange 316 that occurs between a mobile telephone and a service provider. It can be appreciated that the second signalling exchange 316 involves the mobile terminal forwarding a first service request 318 to the SGSN/VLR. The SGSN/VLR fo rwards a service request 320 to the HLR 118 associated with the broker portal 112 which, in turn, determines whether or not the mobile user or mobile telephone has previously selected the service provider to support its needs. It is assumed that the mobile user or mobile terminal has not selected the current service pro vider and, hence, the HLR 118 forwards a refuse signal, providing an indication of the refusal of the service request, to the SGSN/VLR whi ch, in turn, forwards a refuse signal 324 to the mobile telephone.

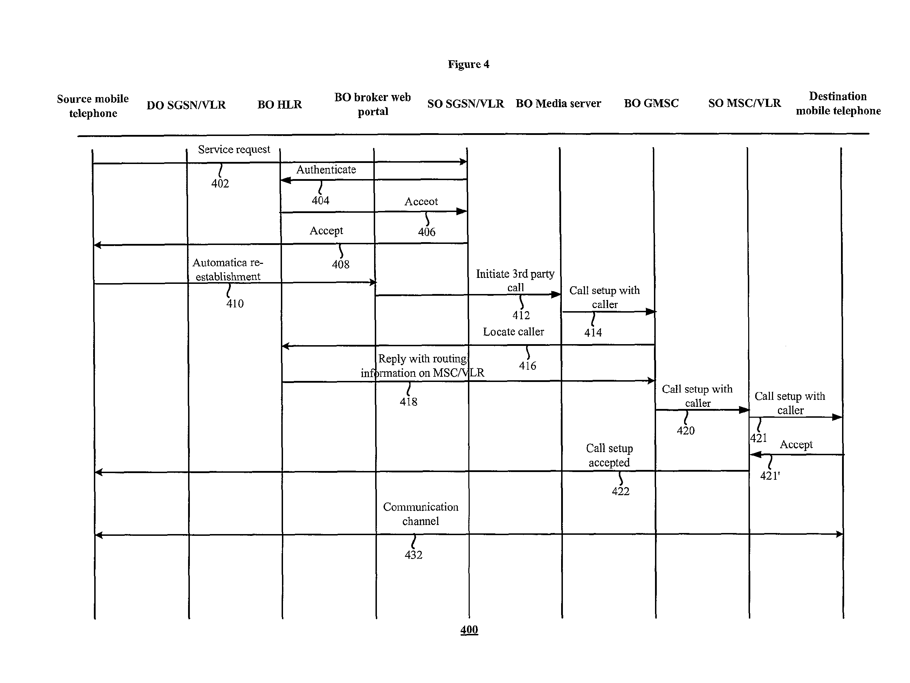

Figure 4 depicts a signalling exchange 400 in the case of the mobile telephone 102 being determined by the HLR 118 to be registered to receive the services supported by the broker portal 112. The mobile telephone 102, referred to within the context of figure 4 as the source mobile telephone, forwards a service request 402 to the SGSN/VLR of the selected service provider network. The SGSN/VLR of the selected service provider network enters into an authentication signalling exchange 404 with the HLR 118 to determine whether or not the source mobile telephone 102 is entitled to use the selected service provider network as its mobile telephony provider. It is assumed that the source mobile telephone 102 is so entitled. Therefore, data containing an indication to that effect, that is, an accept signal 406, is forwarded to the SGSN/VLR of the selected service provider network. The VLR of the selected service provider network is updated to indicate, from a GSM perspective, that the source mobile telephone is a visitor. Also, the HLR 118 is updated to direct an y signalling for the source mobile telephone 102 to the VLR of the selected service provider network and, hence, to the source mobile telephone within the area of radio coverage supported by the selected service provider network.

In response to the SGSN/VL R of the selected service provider network receiving the accept signal 406, a corresponding accept signal 408 is sent to the source mobile telephone. The source mobile telephone 102 forwards an automatic reestablishment request 410 to the broker portal 112 to request reestablishment of a call to a destination mobile telephone. In preferred embodiments, the mobile telephone user selects a service and/or the associated service provider via the broker portal 112, the handset powers off and on again, which has the effect of switching service providers. Alternatively, the mobile telephone can be arranged to scan the available radio frequencies to locate a channel associated with the selected service provider and to initiate the registration process with that service provider. The session is re-established with the broker portal 112, which, in turn, initiates a third party call via the media server 114. Alternatively, once the mobile user has made their operator selection, the phone could be used to set -up a call without needing to reconnect to the broker server 112. Also, if the requested service is a data service, it might be preferable for the mobile telephone to seek a communication channel associated with the newly selected service provider. In response to receiving the automatic reestablishment request 410, the broker portal 112 sends a request 412 to the media server 114 to establish a communication channel between the source mobile telephone 102 and the destination mobile telephone. The media server 1 14, in response to receiving the call request 412, forwards a request 414 to the GMSC 120 associated with the broker portal 112. The GMSC 120 sends a request 416, via the MSC 116, to the HLR 118 associated with the broker portal 112 for location data associated with the mobile telephone 102. The HLR 118 sends a reply 418 to the GMSC 120 containing data identifying the MSC/VLR of the selected service provider network. The GMSC 120 forwards, via the PSTN (not shown) a call set up request 42 0 to the MSC/VLR identified by the HLR as being the selected service provider network. The MSC/VLR forwards a call setup request 421 to the destination mobile, which, assuming the destination mobile accepts the incoming call, forward s an accept signal 421' to the MSC/VLR. In response to receiving the call set up accept data 421', the MSC/VLR sends call set up accepted data 422 to th e source mobile telephone 102, which results in a communication channel 432 being established between the source mobile telephone and the des tination mobile telephone via the selected service provider network from the perspective of the source mobile telephone.

The above embodiments have been described with reference to the initial web page 234 presenting a number of service providers to the mo bile user from which a selection can be made to choose one of the service providers to supply mobile telephony services, that is, voice or data services, to the mobile user. However, embodiments can be realised in which the user specifies a list of criteria to be met by the desired service provider network. The criteria are forwarded to the broker portal 112, which then performs a search of any associated service provider networks to determine the best match with the mobile user's requirements. An indication of the best match, or an ordered list of any matches showing the degree of correlation between the mobile user's criteria and the facilities offered by the service provider networks, is forwarded to the mobile telephone 102. The mobile telephone 102 displays the possible options to the mobile user who can then make a selection from the ordered list or, in event that only the best match is forwarded, can choose that best match. Data containing an indication of the selected service provider is forwarded to the broker portal 112, which processes that selection as indicated above.

It will be appreciated that the broker portal 112 will need to maintain published data reflecting the current services offered by the service provider networks with which it has agreed to cooperate. Therefore, in preferred embodiments, the broker portal 112 comprises means for processing any such published information. Preferably, an API is provided via which network service providers can submit an indication of their offers or capabilities.

The above embodiments have been described with reference to establishing a communication channel, voice or data, between a source mobile telephone and a destination mobile telephone. However, it will be appreciated that embodiments can be realised in which the communication channel, voice or data, is established with some other form of destination device.

It will be appreciated that the above embodiments have been described with reference to mobile telephones. However, embodiments are not limited thereto. Embodiments can be realised in which other wireless services such as, for example, wireless communication protocols are used to support communications of other device like computers, PDAs etc. Still further, the above described mobile tel ephones, wireless enabled computers, PDAs etc. are embodiments of mobile stations.

Although the embodiments described above forwards the service provider selection web page 234 to the mobile telephone 102 upon power -up, that is, initial registration with the broker portal 112, or in response to the mobile user of the mobile telephone 102 requesting such a web page 234 and after determining that the mobile user is registered, via the HLR 118 or the user profiles database 115, embodiments are not limited to such an arrangement. Due to many wireless access points having their security facilities or authentication facilities switched off, mobile terminals within their radio coverage can, for example, access the Internet without difficulty. Indeed, wireless devices are typically configured to automatically detect wireless networks within its vicinity. Accordingly, embodiments can be realised in which the web page 234 is pushed to a visitor mobile terminal that has detected the radio coverage area associated wit h the broker portal. In effect, the mobile user of the mobile telephone 102 receives an unsolicited invitation, via the web page 234, comprising information about service providers associated with the broker portal 112 and giving the mobile user of the mo bile telephone 102 the opportunity to take advantage of or to enter into a contractual relationship with the legal entity responsible for the broker portal 112.

The above embodiments have been described within a GSM context. However, embodiments can be realised using other communications standards such as, for example, TDMA or W -CDMA. Also, embodiments of the present invention have been described with reference to selecting an operator, via the broker operator, with a view to placing a call via the select ed operator.

However, embodiments can be realised in which a data service, in addition or as an alternative to, the voice services are selected by the mobile user.

## Claims

1. A communication system comprising means to receive data from a mobile station comprising an indication of a selected service provider chosen from a plurality of service providers; and means for influencing signalling for establishing a communication channel between a network entity associated with the selected service provider and the mo bile station.

2. A communication system as claimed in claim 1 wherein the means for influencing the signalling comprises means to output signalling to establish a communication channel between the mobile station and a network entity associated with the select ed service provider.

3. A communication system as claimed in any preceding claim comprising means to output graphical interface data to the mobile station to present a user interface depicting the plurality of service providers and for receiving said selection therefrom.

4. A communication system as claimed in claim 3 comprising means for collating data associated with the service providers and in which said graphical interface data comprises the collated data.

5. A communication system as claimed in claim 4 in which the collated data relates to at least one of bandwidth, error rate, data rate, traffic carrying capacity and communication tariffs, or any combination thereof, of the service providers

6. A communication system as claimed in any preceding claim comprising means for updating a database associated with identification data of the mobile station reflecting the selection of the selected service provider and the establishment of the communication channel using the network entity of the selected service provider.

7. A communication system as claimed in any preceding claim comprising a communication portal using a wireless protocol to support data exchanges with the mobile station.

8. A communication system as claimed in any preceding claim comprising means to output data to a network entity of the selected service provide to cause that network entity to exchange call signalling with the mobile station to establish a communication channel with the mobile station.

9. A communication system as claimed in any preceding claim comp rising means to output data to the mobile station to cause the mobile station to exchange call signalling with the network entity of the selected service provide to establish a communication channel.

10. A method of establishing a communication channel between a first communication device and a second communication device; the method comprising instigating call establishment between the first communication device and the second communication device using a currently selected service provider network chosen from a plurality service of possible service providers.

11. A method as claimed in claim 10, comprising the step of receiving data representing the currently selected service provider and updating current service provider details associated with the first communication device.

12. A method as claimed in either of claims 10 and 11 comprising the step of receiving data from at least one service provider of the plurality of service providers relating to service characteristics of the at least one service provider.

13. A method as claimed in any of claims 10 to 12 comprising the step of forwarding or publishing data relating to service characteristics of the plurality of service providers to the first communication device; and receiving data represent the selection of the current service provider.

14. A method as claimed in any of claims 10 to 13 comprising the step of receiving data representing an indication of service requirement s of a mobile user; determining a degree of correlation between at least one of those service requirements and service characteristics of the plurality of service providers and outputting data identifying at least one service provider according said determining.

15. A method as claimed in claim 14, in which the step of outputting comprises the step of outputting data identifying a number of service providers according to said determining.

16. A method as claimed in claim 15, in which the step of outputting data identifying a number of service providers according to said determining comprises outputting data reflecting respective degrees of correlation of the service characteristics of the number of service providers with the service requirements.

17. A method as claimed in any of claims 10 to 16 comprising the first communication device exchanging data with a broker network entity to select the current service provider network.

18. A method of establishing a communication channel between a source communication device and a destination communication device; the method comprising the step of providing an indication of a service provider network selected from a number of service provider networks; storing data reflecting that selection for use in establishing the communication channel; receiving a request to establish the communication channel comprising data identifying the communication device; retrieving the stored data using the data identifying the communication device ; and instigating call setup between the devices.

19. A method to provide communication between a source device and a destination device; the method comprising the step of: establishing working relationships with a plurality of service providers to use their service provider networks; establishing capabilities of the plurality of service provider networks; receiving data associated with a future service provider network selected from at least some of the plurality of service provider networks; storing the data associated with the future service provider network to provide an indication of the current service provider associated with the source device; receiving, from the source device, a call request to establish a communication channel with the destination device; retrieving the stored data associated with the current service provider; and influencing call setup between source device and the destination device using the retrieved data representing the data associated with the current service provider.

20. A computer program comprising code for implementing a system or method as claimed in any preceding claim.

21. Computer readable storage storing a computer program as claimed in claim 21.
